# EUROPÄISCHE PATENTSCHRIFT

(11) **EP 3 445 721 B1**
(45) Veröffentlichungstag und Bekanntmachung des Hinweises auf die Patenterteilung: **17.03.2021**
(21) Anmeldenummer: 17720420.3
(22) Anmeldetag: 21.04.2017
(51) Int. Cl.: C02F 1/28, B01J 39/00, B01J 41/00, B01J 45/00, B01J 20/02, B01J 20/24, B01J 20/26, C02F 1/42, C02F 101/20, C02F 101/30, C02F 101/34

(54) **WASSERAUFBEREITUNGSVORRICHTUNG**
WATER TREATMENT APPARATUS
DISPOSITIF DU TRAITEMENT DE L'EAU

(30) Priorität: 22.04.2016 DE 102016107485
(43) Veröffentlichungstag der Anmeldung: 27.02.2019
(73) Patentinhaber: Pall Corporation, Port Washington, NY 11050 (US)
(72) Erfinder: DAHLBERG, Christian, 72658 Bempflingen (DE); KEY, Steffen, 71106 Magstadt (DE); OECHSLE, Dietmar, 73529 Schwäbisch Gmünd Deutschland (DE)
(74) Vertreter: Hoeger, Stellrecht & Partner Patentanwälte mbB
(86) Internationale Anmeldenummer: PCT/EP2017/059549
(87) Internationale Veröffentlichungsnummer: WO 2017/182650

(56) Entgegenhaltungen:
- EP-A1- 0 483 738
- EP-A1- 2 733 120
- WO-A1-2014/001529

## Beschreibung

### Stand der Technik

Die Erfindung betrifft eine Wasseraufbereitungsvorrichtung nach dem Oberbegriff von Anspruch 1.

Es sind bereits Wasseraufbereitungsvorrichtungen vorgeschlagen worden, welche zur Aufbereitung von Wasser Adsorptionseinheiten mit unspezifischen Adsorptionselementen nutzen, um Schadstoffe zu entfernen. Während eine Aufbereitungseffizienz für die meisten im Wasser enthaltenen Schadstoffe ausreichend ist, ist die Aufbereitungseffizienz solcher Wasseraufbereitungsvorrichtungen in Bezug auf Mikroschadstoffe stark verringert, da diese zum einen in einer wesentlich geringeren Konzentration auftreten und zum andern zumindest im Wesentlichen kleinere Molekulargewichte aufweisen. Zwar liegen die Konzentrationen der einzelnen Mikroschadstoffe üblicherweise unterhalb der kritischen Verträglichkeitsgrenzwerte für Umwelt und Menschen, jedoch wird hierbei der Summenparameter der verschiedenen Mikroschadstoffe nicht berücksichtigt. Insbesondere können bestimmte Mikroschadstoffe nur ungenügend gezielt entfernt werden. Daher ist es von Interesse, diese mit gesteigerter Effizienz aus Wasser zu entfernen.

Wasseraufbereitungsvorrichtungen sind ferner aus der EP 0 483 738 A1, der EP 2 733 120 A1 und der WO 2014/001529 A1 bekannt.

Die Aufgabe der Erfindung besteht insbesondere darin, eine gattungsgemäße Vorrichtung mit verbesserten Eigenschaften hinsichtlich einer Effizienz, insbesondere einer Aufbereitungseffizienz, bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Wasseraufbereitungsvorrichtung, welche zu einer Entfernung von Mikroschadstoffen, insbesondere Arzneimitteln, aus Wasser, insbesondere Trinkwasser, vorgesehen ist, mit zumindest einem Gehäuse und mit zumindest einer in dem Gehäuse angeordneten Adsorptionseinheit, welche die Mikroschadstoffe in zumindest einem Betriebszustand zumindest teilweise adsorbiert und welche zumindest ein unspezifisches Adsorptionselement umfasst.

Es wird vorgeschlagen, dass die Adsorptionseinheit zumindest ein spezifisches Adsorptionselement umfasst. Insbesondere kann die Wasseraufbereitungsvorrichtung zusätzlich eine Filtereinheit aufweisen. Hierdurch kann eine Effizienz, insbesondere eine Aufbereitungseffizienz, verbessert werden. Insbesondere kann eine Güte der Wasseraufbereitung erhöht werden. Ferner kann Wasser vorteilhaft gezielt in Bezug auf bestimmte Mikroschadstoffe aufbereitet werden.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Wasseraufbereitungsvorrichtung" soll insbesondere eine Vorrichtung verstanden werden, welche dazu vorgesehen ist, Wasser, insbesondere Trinkwasser, aufzubereiten, zu läutern, zu klären, zu reinigen und/oder zu säubern und vorteilhaft Mikroschadstoffe zu entfernen, insbesondere indem diese aus dem Wasser gefiltert und/oder sorbiert, insbesondere absorbiert und/oder besonders bevorzugt adsorbiert werden. Die Wasseraufbereitungsvorrichtung ist insbesondere zumindest ein Teil, insbesondere eine Unterbaugruppe einer Wasseraufbereitungskartusche, eines Systems zur Wasseraufbereitung und/oder einer Wasseraufbereitungsanlage, wie beispielsweise einer Kläranlage. Insbesondere kann die Wasseraufbereitungsvorrichtung die Wasseraufbereitungskartusche, das System zur Wasseraufbereitung und/oder die Wasseraufbereitungsanlage vollständig umfassen. Insbesondere ist die Wasseraufbereitungsvorrichtung, vorteilhaft direkt, an einen Hauswasseranschluss, bevorzugt an einen Wasserhahn, anschließbar und ist diesem insbesondere strömungstechnisch vorgeschaltet. Unter "einem Betriebszustand" der Wasseraufbereitungsvorrichtung soll insbesondere ein Zustand verstanden werden, in welchem die Wasseraufbereitungsvorrichtung vollständig von Wasser durchflossen ist.

Unter "Mikroschadstoffen" sollen insbesondere Schadstoffe, wie beispielsweise Industriechemikalien, Arzneimittel, insbesondere Carbamazepin, Sulfamethoxazol, Diclofenac und/oder Ethinylestradiol, Schwermetalle und/oder Pestizide verstanden werden, welche im Wasser, insbesondere gelöst, in einer geringen Konzentration auftreten, und zwar insbesondere in einer Konzentration von weniger als 10000 ppm, bevorzugt von weniger als 1000 ppm, weiter bevorzugt von weniger als 100 ppm und besonders bevorzugt von weniger als 10 ppm. Insbesondere weisen die Mikroschadstoffe ein Molekulargewicht von weniger als 100 kDa, bevorzugt weniger als 10 kDa, weiter bevorzugt weniger als 1 kDa und besonders bevorzugt weniger als 0,1 kDa auf.

Unter einer "Adsorptionseinheit" soll insbesondere eine Einheit mit zumindest einem Adsorptionselement verstanden werden, welches dazu vorgesehen ist, insbesondere mittels zumindest eines Adsorptionsmittels, vorzugsweise mehrerer Adsorptionsmittel, Mikroschadstoff, insbesondere gelösten Mikroschadstoff, zumindest im Wesentlichen fest zu binden und/oder zu adsorbieren, und zwar insbesondere an einer Oberfläche, vorzugsweise in einem Hohlraum und besonders bevorzugt in einer Pore des Adsorptionsmittels. Insbesondere ist der zugrunde liegende Adsorptionsmechanismus zur Bindung der Mikroschadstoffe von einer kovalenten Bindung verschieden. Vorteilhaft ist das Adsorptionselement dazu vorgesehen, die Mikroschadstoffe mittels Coulomb- und/oder van der Waals-Wechselwirkung zumindest im Wesentlichen fest zu binden. Darunter "einen Mikroschadstoff zumindest im Wesentlichen fest zu binden", soll insbesondere verstanden werden, dass ein adsorbierter Mikroschadstoff bei einem Auswaschungstest mittels Durchspülen mit Wasser innerhalb eines Zeitraums von zumindest einer Stunde, vorteilhaft zumindest zwei Stunden und bevorzugt zumindest vier Stunden zu maximal einem Prozent, vorteilhaft maximal einem halben Prozent und bevorzugt maximal einem Promille einer gebundenen Stoffmenge ausgespült wird. Die Adsorptionseinheit ist insbesondere zumindest teilweise chemisch regenerierbar. Unter "chemisch regenerierbar" soll insbesondere verstanden werden, dass das zumindest eine Adsorptionsmittel durch eine chemische Reaktion regeneriert werden kann. Insbesondere ist das Adsorptionsmittel mittels einer Säure und/oder einer Lauge, vorzugsweise einer Natronlauge, chemisch regenerierbar. Ferner ist das Adsorptionsmittel insbesondere mittels einer Salzlösung, vorzugsweise einer Natriumchlorid-Lösung, chemisch regenerierbar. Alternativ oder zusätzlich ist das Adsorptionsmittel insbesondere durch Beaufschlagung mit Energie, wie beispielsweise in Form von Wärme und/oder elektromagnetischer Strahlung, insbesondere durch Licht, vorzugsweise UV-Licht, regenerierbar. Die Adsorptionseinheit ist insbesondere als ein vorteilhaft wasserdurchlässiger fester Block oder als eine Schüttung ausgebildet, welcher/welche zumindest teilweise von zumindest einem Adsorptionselement ausgebildet ist.

Unter einem "unspezifischen Adsorptionselement" soll insbesondere ein Adsorptionselement verstanden werden, welches zumindest ein unspezifisches Adsorptionsmittel aufweist, das dazu vorgesehen ist, mehrere verschiedene Mikroschadstoffe chemisch unspezifisch, insbesondere im gleichen Maße und vorzugsweise unabhängig von funktionellen Gruppen der Mikroschadstoffe und/oder einer Ladung der Mikroschadstoffe zu adsorbieren. Das unspezifische Adsorptionsmittel ist insbesondere dazu vorgesehen, verschiedene Mikroschadstoffe sterisch abhängig zu adsorbieren. Vorteilhaft kann das unspezifische Adsorptionselement mehrere unspezifische Adsorptionsmittel aufweisen. Unter einem "spezifischen Adsorptionselement" soll insbesondere ein Adsorptionselement verstanden werden, welches zumindest ein spezifisches Adsorptionsmittel aufweist, das dazu vorgesehen ist, bestimmte Mikroschadstoffe chemisch oder physikalisch spezifisch, insbesondere in unterschiedlichem Maße und vorzugsweise abhängig von funktionellen Gruppen der Mikroschadstoffe und/oder einer Ladung der Mikroschadstoffe zu adsorbieren. Das spezifische Adsorptionsmittel ist insbesondere dazu vorgesehen, bestimmte Mikroschadstoffe sterisch unabhängig zu adsorbieren. Vorteilhaft kann das spezifische Adsorptionselement mehrere Adsorptionsmittel aufweisen.

Alternativ oder zusätzlich kann die Adsorptionseinheit zumindest teilweise einstückig mit einem weiteren Körper, wie beispielsweise der Filtereinheit, ausgebildet sein, und zwar vorteilhaft als Imprägnierung und/oder Beschichtung. Unter "zumindest teilweise einstückig ausgebildet" soll in diesem Zusammenhang insbesondere verstanden werden, dass zumindest ein Bauteil zumindest eines Objekts einstückig mit zumindest einem Bauteil zumindest eines weiteren Objekts ausgebildet ist. Unter "einstückig" soll insbesondere zumindest stoffschlüssig verbunden, verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden, wie beispielsweise durch eine Herstellung aus einem Guss und/oder durch eine Herstellung in einem Ein- oder Mehrkomponentenspritzverfahren, vorteilhaft aus einem einzelnen Rohling und besonders bevorzugt in einem Spinnverfahren, insbesondere einem Nassspinnverfahren, wie beispielsweise Reaktivspinnen, bei welchem insbesondere in einem Phaseninversionsprozess die Filtereinheit mit integriertem Adsorptionsmittel hergestellt wird, hergestellt.

Unter einer "Filtereinheit" soll insbesondere eine Membranfiltereinheit verstanden werden, die dazu vorgesehen ist, Wasser von Mikroschadstoffen durch Zurückhaltung der Mikroschadstoffe an Poren der Filtermembran zu reinigen. Die Filtereinheit weist insbesondere zumindest ein Filterelement, vorzugsweise wenigstens 5 Filterelemente, bevorzugt wenigstens 10 Filterelemente und besonders bevorzugt mindestens 20 Filterelemente auf. Das Filterelement ist insbesondere als Filtermembran und vorteilhaft als eine Hohlfaserfiltermembran ausgebildet, bei welcher eine Wandung des Filterelements die Membran bildet und einen Hohlkanal definiert. Grundsätzlich kann das Filterelement eine Reinigung von in dem Hohlkanal geführten Wasser bei einem Durchtritt aus dem geschlossenen Hohlkanal durch das Filterelement in einen Außenraum vornehmen, so dass aus dem Hohlkanal austretendes Wasser gereinigt wird, oder bevorzugt eine Reinigung von aus dem Außenraum in den Hohlkanal eintretendem Wasser vornehmen, welches dann im gereinigten Zustand in dem Hohlkanal geführt wird.

Um eine kontinuierliche Adsorption zu erreichen und Verunreinigung des Wassers zwischen dem unspezifischen Adsorptionselement und dem spezifischen Adsorptionselement zu vermeiden, wird vorgeschlagen, dass das unspezifische Adsorptionselement und das spezifische Adsorptionselement zumindest teilweise miteinander in Kontakt stehen. Das unspezifische Adsorptionselement und das spezifische Adsorptionselement grenzen insbesondere direkt aneinander an. Vorteilhaft werden das unspezifische Adsorptionselement und das spezifische Adsorptionselement in einem Betriebszustand zumindest im Wesentlichen gleichzeitig von einem selben Strömungsprofil durchflossen.

Es wird weiterhin vorgeschlagen, dass das unspezifische Adsorptionselement und das spezifische Adsorptionselement zumindest teilweise ineinander angeordnet sind. Dabei kann zumindest eines der Adsorptionselemente als ein Träger für das andere Adsorptionselement ausgebildet sein. Vorzugsweise sind das unspezifische und das spezifische Adsorptionselement miteinander vermischt, insbesondere homogen miteinander vermischt. Hierdurch können insbesondere gleichzeitig eine unspezifische Adsorption und eine spezifische Adsorption erfolgen. Vorzugsweise kann eine Homogenität der unspezifische Adsorption und der spezifischen Adsorption verbessert werden.

In einer bevorzugten Ausgestaltung der Erfindung wird vorgeschlagen, dass die Adsorptionseinheit zu mindestens 10 % und zu höchstens 98 % aus dem unspezifischen Adsorptionselement besteht. Vorteilhaft besteht die Adsorptionseinheit zu mindestens 2 % und zu höchstens 90 % aus dem spezifischen Adsorptionselement. Zusätzlich kann die Adsorptionseinheit insbesondere zumindest teilweise aus einem Festigungsmittel bestehen, welches vorzugsweise dazu vorgesehen ist, insbesondere bei einer Herstellung der Adsorptionseinheit, die Adsorptionseinheit zu stabilisieren. Besonders bevorzugt ist die Adsorptionseinheit vollständig durch das spezifische Adsorptionselement und das unspezifische Adsorptionselement ausgebildet. Die Anteile des spezifischen Adsorptionselements und des unspezifischen Adsorptionselements sind vorteilhaft so gewählt, dass sich diese zu 100 % der Adsorptionseinheit addieren. Besteht die Adsorptionseinheit beispielsweise zu einem Anteil von 10 % aus dem unspezifischen Adsorptionselement, so besteht die Adsorptionseinheit insbesondere zu einem Anteil von 90 % aus dem spezifischen Adsorptionselement. Hierdurch kann eine Aufbereitungseffizienz der Wasseraufbereitungsvorrichtung weiter verbessert werden, da insbesondere die Anteile des unspezifischen Adsorptionselements und des spezifischen Adsorptionselements vorteilhaft auf eine Zusammensetzung der Mikroschadstoffe, welche das aufzubereitende Wasser verunreinigen, abgestimmt werden kann.

Es wird weiterhin vorgeschlagen, dass die Adsorptionseinheit zumindest ein Adsorptionsmittel aufweist, welches einen Grundkörper der Adsorptionseinheit zumindest zu einem Großteil ausbildet. Der Grundkörper bildet insbesondere einen Block und/oder eine Schüttung der Adsorptionseinheit zumindest zu einem Großteil aus und ist insbesondere als Träger für das unspezifische Adsorptionselement und/oder das spezifische Adsorptionselement vorgesehen. Unter dem Ausdruck "zumindest zu einem Großteil" sollen dabei insbesondere mehr als 50 %, vorteilhaft mehr als 65 %, vorzugsweise mehr als 75 %, besonders bevorzugt mehr als 85 % und besonders vorteilhaft zumindest 95 % verstanden werden. Hierdurch kann eine Herstellung vereinfacht werden. Ferner kann eine kompakte Bauweise erzielt werden.

Ferner wird vorgeschlagen, dass das unspezifische Adsorptionselement den Grundkörper zumindest teilweise ausbildet. Der Grundkörper ist insbesondere zumindest zu einem Großteil und vorteilhaft vollständig von dem unspezifischen Adsorptionsmittel gebildet. Insbesondere kann der Grundkörper zumindest teilweise von dem Festigungsmittel gebildet sein. Hierdurch kann eine Herstellung weiter vereinfacht werden, da der Grundkörper variabel als Träger für verschiedene spezifische Adsorptionsmittel des spezifischen Adsorptionselements genutzt werden kann.

Das unspezifische Adsorptionselement umfasst zumindest ein organisches Adsorptionsmittel. Insbesondere handelt es sich bei dem organischen Adsorptionsmittel um Aktivkohle, vorzugsweise granulierte Aktivkohle und besonders bevorzugt gesinterte granulierte Aktivkohle. Denkbar ist insbesondere, dass die Aktivkohle in Form von insbesondere miteinander verflochtenen, vorzugsweise verwobenen Fasern vorliegt. Das organische Adsorptionsmittel bildet insbesondere den Grundkörper zumindest teilweise, vorzugsweise zumindest zu einem Großteil und besonders bevorzugt vollständig aus. Ferner kann das unspezifische Adsorptionselement mehrere, vorzugsweise verschiedene organische Adsorptionsmittel aufweisen. Hierdurch können Kosten einer Herstellung eingespart werden.

Es wird weiterhin vorgeschlagen, dass das unspezifische Adsorptionselement zumindest ein mineralisches Adsorptionsmittel umfasst. Vorzugsweise bildet das mineralische Adsorptionsmittel das unspezifische Adsorptionselement zu 5 % bis 20 % aus. Bei dem mineralischen Adsorptionsmittel handelt es sich insbesondere um Bentonit, Kieselgur, Kieselgel, Aluminiumoxid und/oder Zinkoxid. Ferner kann das unspezifische Adsorptionselement mehrere mineralische Adsorptionsmittel aufweisen. Hierdurch kann eine Aufbereitungseffizienz weiter verbessert werden. Ferner können Kosten gering gehalten werden, da ein Anteil mineralischer Adsorptionsmittel gering gehalten werden kann.

Um insbesondere eine spezifische Adsorption von Arzneimitteln zu verbessern, umfasst das spezifische Adsorptionselement zumindest ein Umkehrphasen-Adsorptionsmittel. Unter einem "Umkehrphasen-Adsorptionsmittel" soll insbesondere ein vorteilhaft quervernetztes, funktionalisiertes organisches Polymer wie beispielsweise Ethylvinylbenzol verstanden werden, welches insbesondere funktionalisierte Liganden aufweist. Vorteilhaft kann der Ligand zu einer hydrophoben Funktionalisierung vorgesehen sein. Das spezifische Adsorptionselement kann insbesondere mehrere Umkehrphasen-Adsorptionsmittel, vorzugsweise mit unterschiedlichen Eigenschaften, insbesondere unterschiedlichen funktionellen Gruppen, aufweisen, welche spezifisch für eine Adsorption mit zumindest einem, insbesondere genau einem Mikroschadstoff vorgesehen sind.

Um insbesondere eine spezifische Adsorption von Schwermetallen und vorteilhaft von in Industriechemikalien, Arzneimitteln und/oder Pestiziden enthaltenen Metallen zu verbessern, umfasst das spezifische Adsorptionselement zumindest ein lonentauscher-Adsorptionsmittel. Unter einem "lonentauscher-Adsorptionsmittel" soll insbesondere ein spezifisches Adsorptionsmittel verstanden werden, welches als Adsorptionsprinzip vorzugsweise Coulomb-Wechselwirkungen nutzt und insbesondere dazu vorgesehen ist, Ionen eines insbesondere in der Flüssigkeit gelösten Mikroschadstoffs zu adsorbieren und/oder auszutauschen. Vorteilhaft kann das lonentauscher-Adsorptionsmittel als ein Kationentauscher-Adsorptionsmittel und/oder Anionentauscher-Adsorptionsmittel ausgebildet sein. Das lonentauscher-Adsorptionsmittel ist insbesondere ein funktionalisiertes hydrophiles Polymer, wie beispielsweise ein funktionalisiertes Kieselgel, eine funktionalisierte Zellulose und/oder ein funktionalisiertes Dextran. Die Funktion des spezifischen Adsorptionsmittels als Anionen- und/oder Kationentauscher-Adsorptionsmittel ist insbesondere abhängig von der Funktionalisierung. Zur Funktionalisierung des spezifischen Adsorptionsmittels als ein Anionentauscher-Adsorptionsmittel können insbesondere Ammoniumgruppen, vorzugsweise quaternäre Ammoniumgruppen, Diethylaminoethyl (DEAE), Trimethylhydroxypropyl (QA), quaternäres Aminoethyl (QAE), quaternäres Aminomethyl (Q), Triethylaminomethyl (TEAE), Triethylaminopropyl (TEAP) und Polyethylenimin (PEI) verwendet werden. Insbesondere zur Funktionalisierung des spezifischen Adsorptionsmittels als Kationentauscher-Adsorptionsmittel können vorteilhaft Carboxylgruppen, Sulfatgruppen, insbesondere Sulfonat (S), Sulfoethyl (SE), Sulfopropyl (SP), Phosphatgruppen, insbesondere Orthophospat (P), Metharylat und/oder Carboxymethyl (CM), verwendet werden. Besonders bevorzugt weist das lonentauscher-Adsorptionsmittel zumindest eine funktionalisierte Agarose auf. Insbesondere ist die Agarose als eine quervernetzte Agarose und zwar insbesondere als Sepharose, vorzugsweise als Sepharosekügelchen, insbesondere auch bekannt als Sepharose beads, ausgebildet. Besonders bevorzugt ist die Agarose mittels einer Ammoniumgruppe, vorzugsweise einer quaternären Ammoniumgruppe und besonders bevorzugt Diethylaminoethyl (DEAE) funktionalisiert. Das spezifische Adsorptionsmittel ist vorzugsweise als ein Anionentauscher-Adsorptionsmittel ausgebildet. Ferner kann das spezifische Adsorptionselement insbesondere mehrere, vorzugsweise verschiedene lonentauscher-Adsorptionsmittel aufweisen.

Ergänzend oder alternativ zu einem lonentauscher-Adsorptionsmittel umfasst das spezifische Adsorptionselement zumindest ein Adsorptionsmittel, welches zu einer Adsorption über Wasserstoffbrücken vorgesehen ist. Bevorzugt weist das spezifische Adsorptionselement als spezifisches Adsorptionsmittel linearvernetztes und insbesondere quervernetztes Polyvinylpyrrolidon (PVPP)
und/oder dessen Copolymere, wie beispielsweise Vinylpyrrolidon/Vinylacetat, insbesondere in verschiedenen Molekulargewichten und Vernetzungsgraden, auf. Hierdurch kann eine Umwelt- und/oder Gesundheitsverträglichkeit weiter verbessert werden. Ferner kann das spezifische Adsorptionselement insbesondere mehrere, vorzugsweise verschiedene Adsorptionsmittel umfassen, welche zu einer Adsorption über Wasserstoffbrücken vorgesehen sind. Hierdurch kann bevorzugt eine spezifische Adsorption von in Arzneimitteln auftretenden Proteinen verbessert werden.

In einer besonders bevorzugten Ausgestaltung der Erfindung wird vorgeschlagen, dass das spezifische Adsorptionselement zumindest ein Komplexbildner-Adsorptionsmittel umfasst. Unter einem Komplexbildner-Adsorptionsmittel soll insbesondere ein Stoff verstanden werden, welcher zumindest einen, vorzugsweise mehrere geladene Liganden, insbesondere Carboxylgruppen, aufweist, welche zumindest einen geladenen Mikroschadstoff, vorzugsweise ein Schwermetall-Ion, adsorbieren und insbesondere binden. Bei der Adsorption bilden das Komplexbildner-Adsorptionsmittel und der Mikroschadstoff insbesondere einen Chelatkomplex aus. Bei dem Komplexbildner-Adsorptionsmittel kann es sich insbesondere um Ethylendiamintetraessigsäure (EDTA) handeln. Ferner kann das spezifische Adsorptionselement insbesondere mehrere, vorzugsweise verschiedene Komplexbildner-Adsorptionsmittel umfassen. Hierdurch kann insbesondere eine spezifische Adsorption von Schwermetallen und vorteilhaft von in Industriechemikalien, Arzneimitteln und/oder Pestiziden enthaltenen Metallen weiter verbessert werden.

Des Weiteren wird ein System vorgeschlagen mit einer Wasseraufbereitungsvorrichtung und mit zumindest einer der Wasseraufbereitungsvorrichtung strömungstechnisch vorgeschalteten Vorfiltrationseinheit. Bevorzugt ist die Vorfiltrationseinheit so angeordnet, dass sämtliches Wasser, welches die Wasseraufbereitungsvorrichtung erreicht, vor einem Eintritt in die Wasseraufbereitungsvorrichtung die Vorfiltrationseinheit durchlaufen hat. Unter einer "Vorfiltrationseinheit" soll insbesondere eine Einheit verstanden werden, die dazu vorgesehen ist, Verschmutzungen mit Partikeln, welche insbesondere eine höhere Größe als Mikroschadstoffe, die in der Wasseraufbereitungsvorrichtung entfernt werden, aufweisen, insbesondere eine Größe höher als 0,01 µm, vorzugsweise höher als 0,1 µm, bevorzugt höher als 1 µm und besonders bevorzugt höher als 10 µm, zu entfernen, um eine Verstopfung der Wasseraufbereitungsvorrichtung zu vermeiden. Es kann insbesondere ein System zur Wasserreinigung mit verbesserter Aufbereitungseffizienz zur Verfügung gestellt werden.

Die Wasseraufbereitungsvorrichtung soll hierbei nicht auf die oben beschriebene Anwendung und Ausführungsform beschränkt sein. Insbesondere kann die Wasseraufbereitungsvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wasseraufbereitungskartusche mit einer Wasseraufbereitungsvorrichtung in einer Schnittansicht,
- Fig. 2: eine Kartusche der Wasseraufbereitungsvorrichtung in einer Explosionsdarstellung,
- Fig. 3: einen Teil der Wasseraufbereitungsvorrichtung in einer Explosionsdarstellung,
- Fig. 4: einen Teil einer Filtereinheit der Wasseraufbereitungsvorrichtung in einer perspektivischen Darstellung,
- Fig. 5: einen Teil einer Adsorptionseinheit der Wasseraufbereitungsvorrichtung in einer schematischen Schnittansicht,
- Fig. 6: ein System mit einer Wasseraufbereitungsvorrichtung und einer Vorfiltrationseinheit in einer schematischen Schnittansicht,
- Fig. 7: eine weitere Wasseraufbereitungsvorrichtung in einer Schnittansicht,
- Fig. 8: eine alternative Wasseraufbereitungsvorrichtung in einer Schnittansicht und
- Fig. 9: eine weitere alternative Wasseraufbereitungsvorrichtung in einer Schnittansicht.

### Beschreibung der Ausführungsbeispiele

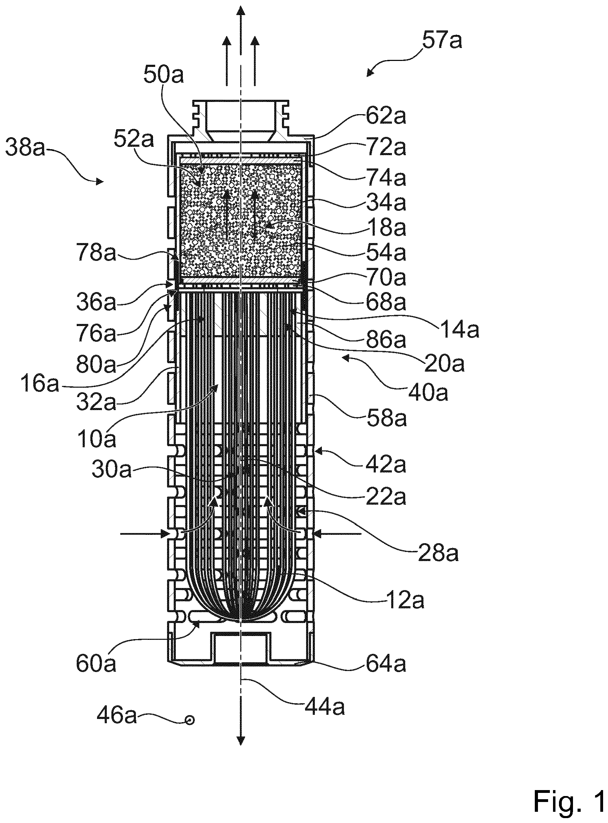

Fig. 1 zeigt eine Wasseraufbereitungskartusche 57a mit einer Wasseraufbereitungsvorrichtung in einer Schnittansicht. Die Wasseraufbereitungsvorrichtung ist zu einer Entfernung von Mikroschadstoffen, insbesondere Arzneimitteln, aus Wasser, insbesondere Trinkwasser, vorgesehen. Hierzu ist die Wasseraufbereitungskartusche 57a zu einem Einbau in einem System zur Aufbereitung von Wasser vorgesehen.

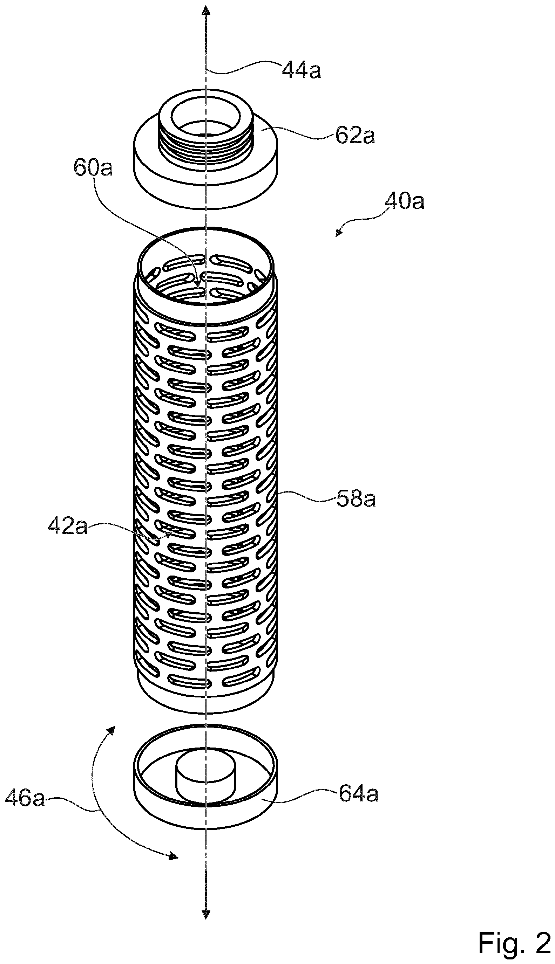

Fig. 2 zeigt eine Kartusche 40a der Wasseraufbereitungsvorrichtung. Die Kartusche 40a ist rohrförmig ausgebildet. Die Kartusche 40a weist einen Zylindermantel 58a auf. Der Zylindermantel 58a definiert in seinem Inneren einen Aufnahmeraum 60a. Der Aufnahmeraum 60a dient zur Aufnahme weiterer Einheiten der Wasseraufbereitungsvorrichtung. Die Kartusche 40a weist Öffnungen 42a auf, welche in axialer Richtung 44a betrachtet in Umfangsrichtung 46a zueinander versetzt angeordnet sind. Ferner sind die Öffnungen 42a in axial Richtung 44a zueinander versetzt angeordnet. Die Öffnungen 42a sind durch Ausnehmungen, insbesondere zur axialen Richtung 44a senkrechte Ausnehmungen, des Zylindermantels 58a gebildet. Die Kartusche 40a weist einen Kartuschenanschluss 62a auf. Der Kartuschenanschluss 62a ist zum Anschluss der Wasseraufbereitungsvorrichtung an eine Wasserleitung vorgesehen. Der Kartuschenanschluss 62a weist ein Schraubgewinde zum Anschluss der Wasseraufbereitungsvorrichtung auf. Der Kartuschenanschluss 62a verschließt den Zylindermantel 58a von einer Seite, insbesondere in axialer Richtung 44a. Ferner weist die Kartusche 40a einen Kartuschenabschluss 64a auf. Der Kartuschenabschluss 64a verschließt den Zylindermantel 58a von einer weiteren Seite, insbesondere in axialer Richtung 44a. Die Kartusche 40a ist aus einem Kunststoff ausgebildet. Vorteilhaft ist die Kartusche 40a aus Polypropylen und zwar besonders bevorzugt aus einem Polypropylen-Homopolymerisat (PP-H) ausgebildet.

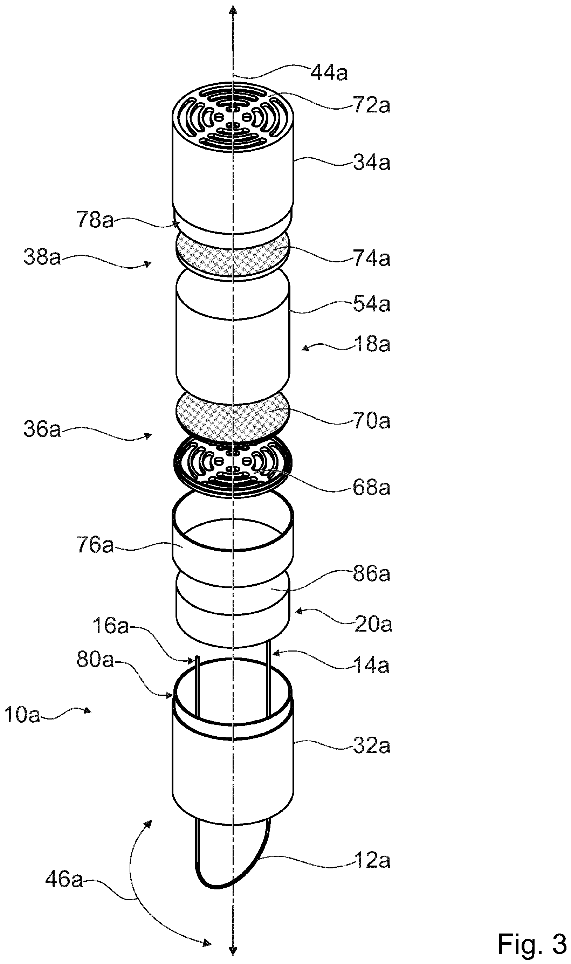

Fig. 3 zeigt eine Explosionsdarstellung eines Teils der Wasseraufbereitungsvorrichtung. Die Wasseraufbereitungsvorrichtung weist ein Filtergehäuse 32a auf. Das Filtergehäuse 32a ist im montierten Zustand in dem Aufnahmeraum 60a der Kartusche 40a angeordnet.

In dem Filtergehäuse 32a ist zumindest teilweise eine Filtereinheit 10a der Wasseraufbereitungsvorrichtung angeordnet. Die Filtereinheit 10a ist in Haupterstreckungsrichtung der Filtereinheit 10a betrachtet zu weniger als 50 % innerhalb des Filtergehäuses 32a angeordnet. Das Filtergehäuse 32a ist als ein Hohlzylinder ausgebildet. Das Filtergehäuse 32a weist einen Zylindermantel auf, der ein Halteelement 20a der Wasseraufbereitungsvorrichtung zumindest teilweise umschließt. Ferner weist die Wasseraufbereitungsvorrichtung ein Adsorptionsgehäuse 34a auf. Das Adsorptionsgehäuse 34a ist im montierten Zustand in dem Aufnahmeraum 60a der Kartusche 40a angeordnet. In dem Adsorptionsgehäuse 34a ist eine Adsorptionseinheit 18a der Wasseraufbereitungsvorrichtung angeordnet. Das Adsorptionsgehäuse 34a ist als ein Hohlzylinder ausgebildet. Das Adsorptionsgehäuse 34a weist einen Zylindermantel auf, der die Adsorptionseinheit 18a zumindest teilweise umschließt. In einem Betriebszustand, in welchem die Wasseraufbereitungsvorrichtung von Wasser durchströmt ist, ist das Filtergehäuse 32a in Strömungsrichtung betrachtet dem Adsorptionsgehäuse 34a vorgeschaltet.

Die Wasseraufbereitungsvorrichtung weist eine Siebeinheit 38a auf. Die Siebeinheit 38a trennt das Filtergehäuse 32a und das Adsorptionsgehäuse 34a voneinander. Ferner verschließt die Siebeinheit 38a das Adsorptionsgehäuse 34a von wenigstens einer Seite zumindest teilweise. Die Siebeinheit 38a umfasst einen Siebdeckel 68a. Der Siebdeckel 68a verschließt die Adsorptionseinheit 18a von einer Seite zumindest teilweise. Ferner trennt der Siebdeckel 68a die Adsorptionseinheit 18a von der Filtereinheit 10a. Der Siebdeckel 68a ist formschlüssig mit dem Adsorptionsgehäuse 34a verbunden. Ferner könnte der Siebdeckel 68a kraft- und/oder stoffschlüssig mit dem Adsorptionsgehäuse 34a verbunden sein. Alternativ oder zusätzlich kann der Siebdeckel 68a einstückig mit dem Adsorptionsgehäuse 34a ausgebildet sein. Der Siebdeckel 68a weist mehrere Durchlassöffnungen auf. Die Durchlassöffnungen sind dazu vorgesehen, einen Wasserfluss zwischen der Filtereinheit 10a und der Adsorptionseinheit 18a zu ermöglichen.

Die Siebeinheit 38a umfasst zumindest eine Fritte 70a. Die Fritte 70a ist scheibenförmig. Die Fritte 70a ist aus einem porösen Material hergestellt. Die Fritte 70a ist aus einem vernetzten Polyethylen hergestellt. Die Fritte 70a ist auf einer der Adsorptionseinheit 18a zugewandten Seite der Siebeinheit 38a angeordnet. Die Fritte 70a ist in dem Adsorptionsgehäuse 34a angeordnet. Die Fritte 70a ist in Durchflussrichtung betrachtet hinter dem Siebdeckel 68a und insbesondere vor der Adsorptionseinheit 18a angeordnet. Die Fritte 70a ist dazu vorgesehen, eine Verunreinigung der Adsorptionseinheit 18a und vorzugsweise ein zumindest teilweises Austreten der Adsorptionseinheit 18a aus dem Adsorptionsgehäuse 34a zu vermeiden.

Die Siebeinheit 38a weist einen weiteren Siebdeckel 72a auf. Der weitere Siebdeckel 72a ist zumindest im Wesentlichen äquivalent zu dem Siebdeckel 68a ausgebildet. Der weitere Siebdeckel 72a ist einstückig mit dem Adsorptionsgehäuse 34a ausgebildet. Denkbar ist, dass der weitere Siebdeckel 72a separat von dem Adsorptionsgehäuse 34a ausgebildet und insbesondere kraft- und/oder formschlüssig mit diesem verbunden ist. Der weitere Siebdeckel 72a verschließt das Adsorptionsgehäuse 34a von wenigstens einer weiteren Seite zumindest teilweise. Der weiteren Siebdeckel 72a ist in Durchflussrichtung betrachtet hinter der Adsorptionseinheit 18a angeordnet. Ferner weist die Siebeinheit 38a eine weitere Fritte 74a auf. Die weitere Fritte 74a ist zumindest im Wesentlichen äquivalent zu der Fritte 70a ausgebildet. Die weitere Fritte 74a ist in dem Adsorptionsgehäuse 34a angeordnet. Die weitere Fritte 74a ist in Durchflussrichtung betrachtet hinter der Adsorptionseinheit 18a und insbesondere vor dem weiteren Siebdeckel 72a angeordnet.

Die Wasseraufbereitungsvorrichtung weist eine Verbindungseinheit 36a auf. Die Verbindungseinheit 36a verbindet im montierten Zustand das Adsorptionsgehäuse 34a und das Filtergehäuse 32a, insbesondere formschlüssig, miteinander. Alternativ oder zusätzlich kann die Verbindungseinheit 36a auch zu einer kraft- und/oder stoffschlüssigen Verbindung vorgesehen sein. Es ist beispielsweise denkbar, dass die Verbindungseinheit 36a zu einer zusätzlichen kraftschlüssigen Verbindung ein Gewinde aufweist. Die Verbindungseinheit 36a umfasst zumindest ein Verbindungselement 76a, welches im montierten Zustand das Filtergehäuse 32a mit dem Adsorptionsgehäuse 34a verbindet. Das Verbindungselement 76a ist separat von dem Adsorptionsgehäuse 34a und/oder dem Filtergehäuse 32a ausgebildet. Alternativ oder zusätzlich kann das Verbindungselement 76a mit dem Filtergehäuse 32a und/oder dem Adsorptionsgehäuse 34a zumindest teilweise einstückig ausgebildet sein. Das Verbindungselement 76a ist als eine Muffe ausgebildet.

Die Verbindungseinheit 36a weist zumindest eine Verbindungselementaufnahme 78a auf, welche dazu vorgesehen ist, das Verbindungselement 76a aufzunehmen. Die Verbindungselementaufnahme 78a ist korrespondierend zu dem Verbindungselement 76a ausgebildet. Die Verbindungselementaufnahme 78a ist als eine Ausnehmung des Adsorptionsgehäuses 34a ausgebildet. Die Verbindungseinheit 36a weist eine weitere Verbindungselementaufnahme 80a auf. Die weitere Verbindungselementaufnahme 80a ist zumindest im Wesentlichen äquivalent zu der Verbindungselementaufnahme 78a ausgebildet. Die weitere Verbindungselementaufnahme 80a ist als eine Ausnehmung des Filtergehäuses 32a ausgebildet.

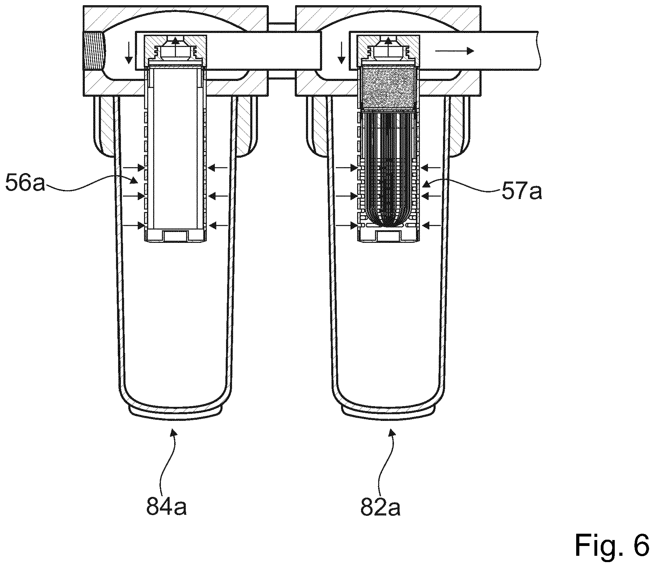

Bei einer Montage der Wasseraufbereitungsvorrichtung wird die weitere Fritte 74 a im Adsorptionsgehäuse 34a angeordnet. Ferner wird die Adsorptionseinheit 18a, insbesondere in Durchflussrichtung betrachtet hinter der weiteren Fritte 70a, in dem Adsorptionsgehäuse 34a angeordnet. Ferner wird die Fritte 70a, insbesondere in Durchflussrichtung betrachtet nach der Adsorptionseinheit 18a, in dem Adsorptionsgehäuse 34a angeordnet. Der Siebdeckel 68a verschließt das Adsorptionsgehäuse 34a. Die Filtereinheit 10a wird in dem Filtergehäuse 32a angeordnet. Das Filtergehäuse 32a wird in Durchflussrichtung betrachtet nach dem Adsorptionsgehäuse 34a angeordnet. Die Verbindungseinheit 36a verbindet das Adsorptionsgehäuse 34a und das Filtergehäuse 32a. Das Verbindungselement 76a greift in die Verbindungselementaufnahme 78a ein. Das Verbindungselement 76a greift in die weitere Verbindungselementaufnahme 80a ein. Das Filtergehäuse 32a und das Adsorptionsgehäuse 34 werden in dem Aufnahmeraum 60a der Kartusche 40a angeordnet. Der Zylindermantel 58a wird von dem Kartuschenabschluss 64a verschlossen. Ferner wird der Zylindermantel 58a mit dem Kartuschenanschluss 62a verbunden. Ferner kann die Kartusche 40a in einem übergeordneten Gehäuse 82a angeordnet werden (vgl. Fig. 6).

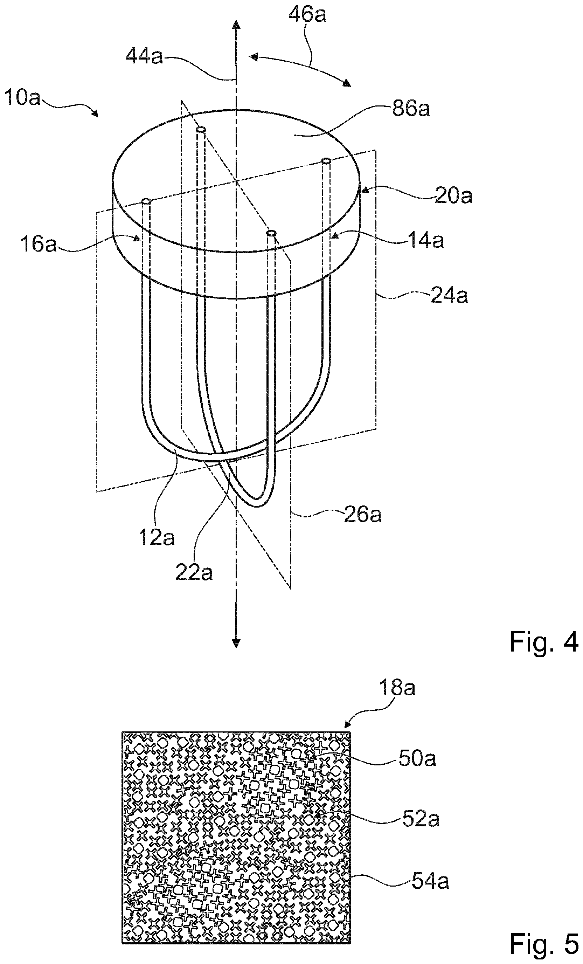

In Fig. 4 ist schematisch ein Teil der Filtereinheit 10a dargestellt. Die Filtereinheit 10a ist in einem Betriebszustand der Wasseraufbereitungsvorrichtung wenigstens zu einer Filterung des Wassers vorgesehen. Die Filtereinheit 10a ist als eine Membranfiltereinheit ausgebildet. Die Filtereinheit 10a weist zumindest ein Filterelement 12a auf. Die Filtereinheit 10a weist insbesondere eine Vielzahl von Filterelementen 12a, 22a auf, wobei in Fig. 4 der Übersichtlichkeit halber nur zwei zueinander äquivalente Filterelemente 12a, 22a dargestellt sind. Das Filterelement 12a ist röhrenförmig. Das Filterelement 12a ist als eine Filtermembran ausgebildet. Bei der Filtermembran handelt es sich um eine Hohlfaserfiltermembran. Das Filterelement 12a weist eine Wandung auf. Die Wandung bildet die Filtermembran. Die Wandung definiert einen Hohlkanal des Filterelements 12a. Das Filterelement 12a weist einen ersten Endabschnitt 14a und einen zweiten Endabschnitt 16a auf. Die Endabschnitte 14a, 16a erstrecken sich entlang des Filterelements 12 über maximal 5 cm. Die Endabschnitte 14a, 16a sind mittels des Halteelements 20a der Wasseraufbereitungsvorrichtung fest zueinander angeordnet. Die Endabschnitte 14a, 16a des Filterelements 12a sind fest mit dem Halteelement 20a verbunden. Das Halteelement 20a ist als ein scheibenförmiger Block ausgebildet. Das Halteelement 20a ist stoffschlüssig mit dem Filtergehäuse 32a verbunden. Das Halteelement 20a ist vorteilhaft aus einem Bindemittel 86a gebildet. Das Bindemittel 86a ist ein Epoxidharz. Denkbar ist, dass ein anderes Bindemittel 86a verwendet werden kann, wie beispielsweise ein Kleber und/oder ein Kunststoff. Die Endabschnitte 14a, 16a werden vor einer Montage des Filterelements 12a derart verödet, dass das Bindemittel 86a nicht das Filterelement 12a, insbesondere die Wandung des Filterelements 12a, verunreinigt. Bei einer Montage wird das Filtergehäuse 32a mit dem Bindemittel 86a gefüllt. Die Endabschnitte 14a, 16a des Filterelements 12a werden in dem noch flüssigen Bindemittel 86a angeordnet. Das Bindemittel 86a wird zum Halteelement 20a ausgehärtet. Ferner wird das ausgehärtete Bindemittel 86a derart angeschliffen, dass Öffnungen der Endabschnitte 14a, 16a des Filterelements 12a freiliegen.

Das Filterelement 12a ist im montierten Zustand zumindest abschnittsweise gebogen und weist insbesondere eine Schlingenform auf. Das Filterelement 12a ist derart gebogen, dass die Endabschnitte 14a, 16a des Filterelements 12a einen Innenwinkel von 0° bis 90° einschließen. Im vorliegenden Fall sind die Endabschnitte 14a, 16a zumindest im Wesentlichen parallel oder vorzugsweise antiparallel zueinander, so dass das Filterelement 12a vorzugsweisen u-förmig gebogen ist. Im vorliegenden Fall beträgt der Innenwinkel demzufolge ungefähr 0°. Das Filterelement 12a weist insbesondere eine Haupterstreckungsebene 24a auf. Das Filterelement 12a ist über die gesamte Erstreckung des Filterelements 12a von der Haupterstreckungsebene 24a geschnitten.

Ferner weist die Filtereinheit 10a zumindest ein weiteres Filterelement 22a auf. Das weitere Filterelement 22a ist zumindest im Wesentlichen äquivalent zu dem Filterelement 12a ausgebildet, insbesondere äquivalent zu diesem geformt und vorteilhaft äquivalent mit dem Halteelement 20a befestigt. Das Filterelement 12a und das weitere Filterelement 22a unterscheiden sich voneinander durch eine Länge. Das weitere Filterelement 22a umgreift das Filterelement 12a zumindest teilweise. Das weitere Filterelement 22a weist eine weitere Haupterstreckungsebene 26a auf. Im montierten Zustand ist die weitere Haupterstreckungsebene 26a des weiteren Filterelements 22a verschieden von der Haupterstreckungsebene 24a des Filterelements 12a. Ferner sind die Haupterstreckungsebene 24a des Filterelements 12a und die weitere Haupterstreckungsebene 26a des weiteren Filterelements 22a zueinander winklig angeordnet. Im vorliegenden Fall sind die Haupterstreckungsebene 24a des Filterelements 12a und die weitere Haupterstreckungsebene 26a des weiteren Filterelements 22a zumindest im Wesentlichen senkrecht zueinander. Ferner können die Haupterstreckungsebenen 24a, 26a auch einen anderen Winkel zueinander aufweisen, insbesondere von 20° bis 160°, oder alternativ zumindest im Wesentlichen parallel zueinander angeordnet sein.

Die Filtereinheit 10a weist ferner eine Gruppe 28a (vgl. Fig. 2) von Filterelementen 12a auf. Die Gruppe 28a von Filterelementen 12a weist zumindest ein zusätzliches Filterelement 12a, insbesondere mehrere zusätzliche Filterelemente 12a auf, welches/welche zumindest im Wesentlichen äquivalent zu dem Filterelement 12a ausgebildet ist/sind. Die Filterelemente 12a der Gruppe 28a sind insbesondere mittels eines Netzes des Wasseraufbereitungsvorrichtung gebündelt. Die Filtereinheit 10a weist ferner eine weitere Gruppe 30a (vgl. Fig. 2) von weiteren Filterelementen 22a auf. Die weitere Gruppe 30a von weiteren Filterelementen 22a weist zumindest ein zusätzliches weiteres Filterelement 22a, insbesondere mehrere zusätzliche weitere Filterelemente 22a auf, welches/welche zumindest im Wesentlichen äquivalent zu dem weiteren Filterelement 22a ist/sind. Die Filterelemente 22a der Gruppe 30a sind insbesondere mittels eines weiteren Netzes des Wasseraufbereitungsvorrichtung gebündelt. Alternativ oder zusätzlich kann die Filtereinheit 10a nur eine der Gruppen 28a, 30a oder zusätzliche Gruppen aufweisen.

In Fig. 5 ist die Adsorptionseinheit 18a schematisch in einer Schnittansicht dargestellt. Die Adsorptionseinheit 18a weist ein unspezifisches Adsorptionselement 50a auf. Die Adsorptionseinheit 18a kann zu mindestens 10 % und zu höchstens 98 % aus dem unspezifischen Adsorptionselement 50a bestehen. Im vorliegenden Fall besteht die Adsorptionseinheit 18a zu 80 % aus dem unspezifischen Adsorptionselement 50a. Insbesondere kann die Adsorptionseinheit 18a auch zu weiteren Werten von 10 % bis 98 % aus dem unspezifischen Adsorptionselement 50a bestehen.

Das unspezifische Adsorptionselement 50a umfasst zumindest ein organisches Adsorptionsmittel. Im vorliegenden Fall ist das organische Adsorptionsmittel Aktivkohle. Das organische Adsorptionsmittel liegt dabei in Form einer zylinderförmigen Blocks vor. Das organische Adsorptionsmittel ist Aktivkohle, insbesondere gesinterten granulierte Aktivkohle. Alternativ oder zusätzlich kann das organische Adsorptionsmittel als Schüttung, insbesondere in granulierter Form vorliegen. Das unspezifische Adsorptionselement 50a umfasst einen Grundkörper 54a. Der Grundkörper 54a bildet zu einem Großteil die Adsorptionseinheit 18a aus. Die Adsorptionseinheit 18a weist ein Adsorptionsmittel auf, welches den Grundkörper 54a der Adsorptionseinheit 18a zumindest teilweise ausbildet. Im vorliegenden Fall bildet das organische Adsorptionsmittel den Grundkörper 54a zumindest teilweise aus. Alternativ kann das organische Adsorptionsmittel den Grundkörper 54a vollständig ausbilden.

Ferner umfasst das unspezifische Adsorptionselement 50a zumindest ein mineralisches Adsorptionsmittel. Das unspezifische Adsorptionselement 50a weist zu 5 % bis 20 % zumindest das eine mineralische Adsorptionsmittel auf. Im vorliegenden Fall weist das unspezifische Adsorptionselement 50a zu 5 % ein mineralisches Adsorptionsmittel auf. Im vorliegenden Fall ist das mineralische Adsorptionsmittel Bentonit. Ferner bildet das mineralische Adsorptionsmittel zumindest teilweise den Grundkörper 54a des unspezifischen Adsorptionselements 50a aus. Alternativ oder zusätzlich kann das unspezifische Adsorptionselement 50a als mineralisches Adsorptionsmittel Kieselgur, Kieselgel, Aluminiumoxid und/oder Zinkoxid aufweisen.

Die Adsorptionseinheit 18a weist ein spezifisches Adsorptionselement 52a auf. Die Adsorptionseinheit 18a kann zu mindestens 2 % und zu höchstens 90 % aus dem spezifischen Adsorptionselement 52a bestehen. Im vorliegenden Fall besteht die Adsorptionseinheit 18a zu 20 % aus dem spezifischen Adsorptionselement 52a. Insbesondere kann die Adsorptionseinheit 18a auch zu weiteren Werten von 2 % bis 90 % aus dem spezifischen Adsorptionselement 52a bestehen. Das spezifische Adsorptionselement 52a umfasst zumindest ein spezifisches Adsorptionsmittel. Alternativ oder zusätzlich kann der Grundkörper 54a der Adsorptionseinheit 18a zumindest teilweise aus einem spezifischen Adsorptionsmittel gebildet sein.

Das spezifische Adsorptionselement 52a umfasst zumindest ein Umkehrphasen-Adsorptionsmittel, wie beispielsweise ein quervernetztes, funktionalisiertes organisches Polymer. Vorzugsweise umfasst das spezifische Adsorptionselement 52a als Umkehrphasen-Adsorptionsmittel quervernetztes Ethylvinylbenzol. Ferner umfasst das spezifische Adsorptionselement 52a zumindest ein lonentauscher-Adsorptionsmittel. Das lonentauscher-Adsorptionsmittel kann als Kationentauscher oder Anionentauscher ausgebildet sein. Im vorliegenden Fall ist das lonentauscher-Adsorptionsmittel als ein Anionentauscher ausgebildet. Das lonentauscher-Adsorptionsmittel ist eine Agarose, welche mittels einer Ammoniumgruppe, vorzugsweise einer quaternären Ammonioumgruppe und besonders bevorzugt Diethylaminoethyl (DEAE), funktionalisiert ist. Ferner umfasst das spezifische Adsorptionselement 52a zumindest ein Adsorptionsmittel, welches zu einer Adsorption über Wasserstoffbrücken vorgesehen ist. Im vorliegenden Fall ist das Adsorptionsmittel, welches zu einer Adsorption über Wasserstoffbrücken vorgesehen ist, lineares und/oder quervernetztes Polyvinylpyrrolidon (PVPP). Ferner umfasst das spezifische Adsorptionselement 52a zumindest ein Komplexbildner-Adsorptionsmittel. Im vorliegenden Fall ist das Komplexbildner-Adsorptionsmittel Ethylendiamintetraessigsäure (EDTA). Alternativ oder zusätzlich kann das spezifische Adsorptionselement 52a weitere spezifische Adsorptionsmittel aufweisen.

Das unspezifische Adsorptionselement 50a und das spezifische Adsorptionselement 52a stehen zumindest teilweise miteinander in Kontakt. Das unspezifische Adsorptionselement 50a und das spezifische Adsorptionselement 52a sind zumindest teilweise ineinander angeordnet und insbesondere miteinander vermischt.

In einem Betriebszustand ist die Wasseraufbereitungsvorrichtung vollständig mit aufzubereitendem Wasser durchflossen (vgl. Fig. 1). Die Richtung, in welcher das Wasser in die Wasseraufbereitungsvorrichtung eintritt, ist insbesondere zumindest im Wesentlichen senkrecht zu einer Richtung, in welcher das Wasser die Wasseraufbereitungsvorrichtung verlässt. Das Wasser tritt durch die Öffnungen der Kartusche 40a, insbesondere zumindest im Wesentlichen senkrecht zur axialen Richtung 44a, in die Wasseraufbereitungsvorrichtung ein. Ferner dringt das Wasser zumindest im Wesentlichen senkrecht zur axialen Richtung 44a in die Filtereinheit 10a ein. Das Wasser durchdringt das Filterelement 12a, insbesondere die Wandung des Filterelements 12a, zumindest teilweise. Das Wasser wird mittels der Wandung gefiltert. Das Wasser sammelt sich im Inneren des Filterelements 12a, insbesondere im Hohlkanal. Der Hohlkanal leitet das Wasser in Richtung der Adsorptionseinheit 18a. Das Wasser durchdringt die Adsorptionseinheit 18a, insbesondere in axialer Richtung 44a. Im Wasser enthaltene Mikroschadstoffe werden von der Adsorptionseinheit 18a adsorbiert. Das Wasser verlässt die Wasseraufbereitungsvorrichtung durch den Kartuschenanschluss 62a, insbesondere in axialer Richtung 44a.

In Fig. 6 ist ein System mit der Wasseraufbereitungsvorrichtung und mit einer Vorfiltrationseinheit 56a gezeigt. Die Vorfiltrationseinheit 56a ist der Wasseraufbereitungsvorrichtung strömungstechnisch vorgeschaltet. Das System ist zu einem Einbau in eine Wasserleitung vorgesehen. Die Vorfiltrationseinheit 56a ist als Mikrofiltrationseinheit mit einer Filtermembran ausgebildet und zu einer Rückhaltung von groben Schmutzpartikeln mit einer Größe von zumindest 5 µm vorgesehen. In alternativen Ausgestaltungen können Filtermembranen verwendet werden, die für eine Zurückhaltung von groben Schmutzpartikeln mit anderen Größen, beispielsweise 20 µm, geeignet sind. In der Wasseraufbereitungsvorrichtung werden anschließend die Mikroschadstoffe entfernt.

Die Wasseraufbereitungsvorrichtung ist in dem übergeordneten Gehäuse 82a angeordnet. Das übergeordnete Gehäuse 82a weist einen Ablauf mit Schraubgewinde für einen Anschluss an eine Wasserleitung auf. Die Vorfiltrationseinheit 56a ist in einem weiteren übergeordneten Gehäuse 84a angeordnet. Das weitere übergeordnete Gehäuse 84a weist einen Anschluss mit Schraubgewinde für einen Anschluss an eine Wasserleitung auf. Die Vorfiltrationseinheit 56a und die Wasseraufbereitungsvorrichtung sind so zueinander angeordnet, dass Wasser, welches in das weitere übergeordnete Gehäuse 84a eintritt, zunächst die Vorfiltrationseinheit 56a passiert und anschließend in das übergeordnete Gehäuse 82a gelangt, in welchem das Wasser mittels der Wasseraufbereitungsvorrichtung aufbereitet wird.

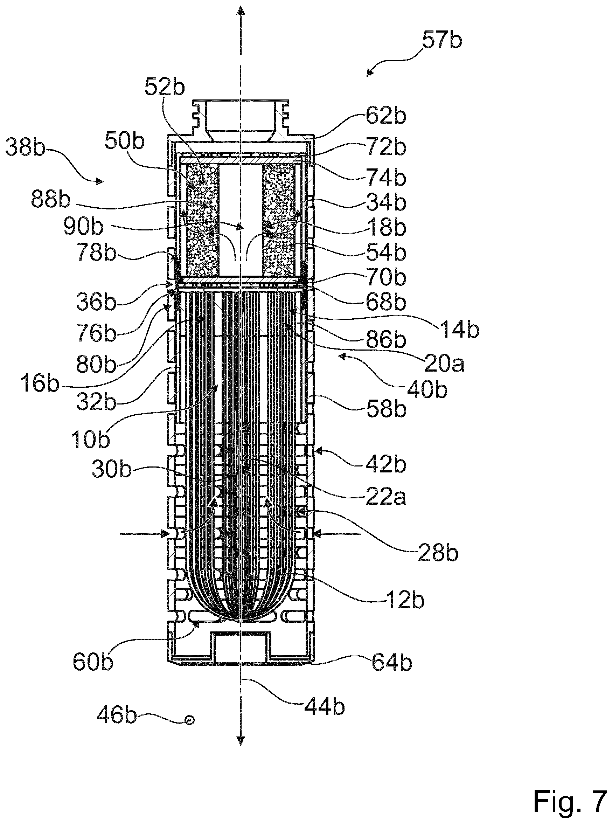

In den Fig. 7 bis 9 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6, verwiesen werden kann. Zur Unterscheidung der Ausführungsbeispiele ist der Buchstabe a den Bezugszeichen des Ausführungsbeispiels in den Fig. 1 bis 6 nachgestellt. In den Ausführungsbeispielen der Fig. 7 bis 9 ist der Buchstabe a durch die Buchstaben b bis d ersetzt.

Die Fig. 7 zeigt eine weitere Wasseraufbereitungsvorrichtung. Das Ausführungsbeispiel der Fig. 7 unterscheidet sich von dem vorherigen Ausführungsbeispiel zumindest im Wesentlichen durch eine Adsorptionseinheit 18b der Wasseraufbereitungsvorrichtung. Im vorliegenden Fall ist die Adsorptionseinheit 18b zumindest im Wesentlichen rohrförmig ausgebildet. Die Adsorptionseinheit 18b weist eine Rohrwandung 88b auf. Die Rohrwandung 88b definiert einen Rohrkanal 90b. Im Betriebszustand durchdringt das aufzubereitende Wasser die Adsorptionseinheit 18b zumindest im Wesentlichen senkrecht zu einer axialen Richtung 44b. Das Wasser wird von einer Filtereinheit 10b in axialer Richtung 44b in den Rohrkanal 90b geführt. Der Rohrkanal 90b ist an einem Ende verschlossen, so dass das Wasser zumindest im Wesentlichen senkrecht zur axialen Richtung 44b die Rohrwandung 88b der Adsorptionseinheit 18b durchdringt. Nachdem das Wasser die Rohrwandung 88b durchdrungen hat, tritt es in ein Adsorptionsgehäuse 34b ein. Das Adsorptionsgehäuse 34b lenkt das Wasser in die axiale Richtung 44b um.

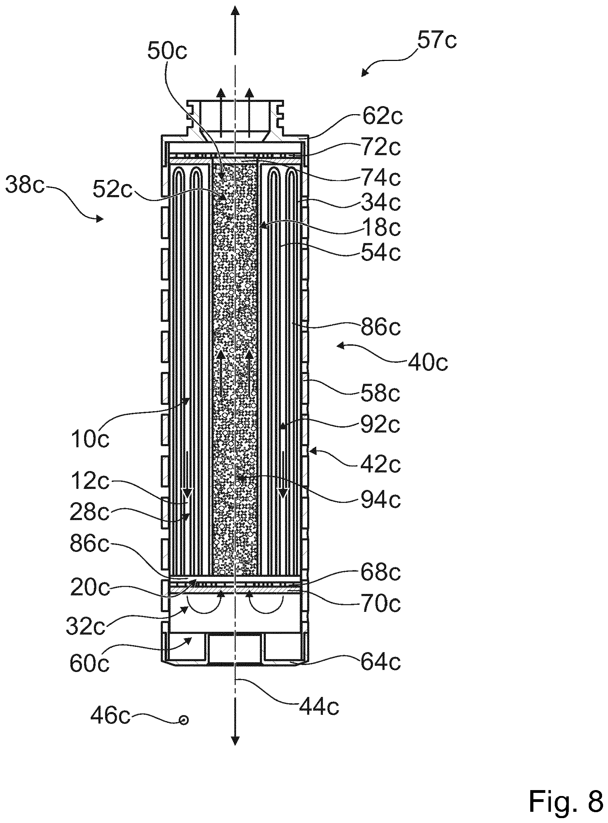

Die Fig. 8 zeigt eine alternative Wasseraufbereitungsvorrichtung. Das Ausführungsbeispiel der Fig. 8 unterscheidet sich von den vorherigen Ausführungsbeispielen zumindest im Wesentlichen dadurch, dass eine Filtereinheit 10c der Wasseraufbereitungsvorrichtung rohrförmig ausgebildet ist. Die Filtereinheit 10c weist eine Rohrwandung 92c auf. Die Rohrwandung 92c ist zumindest teilweise gebildet durch eine Gruppe 28c von Filterelementen 12c der Filtereinheit 10c. Die Filterelemente 12c sind in einem Kreis angeordnet. Ein Halteelement 20c der Wasseraufbereitungsvorrichtung, in welcher die Filterelemente 12c angeordnet sind, ist als eine Kreisscheibe ausgebildet. Die Kreisscheibe weist eine Öffnung auf. Die Rohrwandung 92c definiert einen Rohrkanal 94c. Ein Adsorptionsgehäuse 34c der Wasseraufbereitungsvorrichtung ist innerhalb des Rohrkanals 94c angeordnet. Ein Filtergehäuse 32c, in welchem die Filtereinheit 10c zumindest teilweise angeordnet ist, ist in axialer Richtung 44c verschlossen. Tritt Wasser in einem Betriebszustand aus den Filterelementen 12c in axialer Richtung 44c aus, wird es von dem Filtergehäuse 32c in umgekehrte Richtung umgelenkt. Das Wasser tritt durch die Öffnung eines Halteelements 20c in das Adsorptionsgehäuse 34c ein, insbesondere in axialer Richtung 44c.

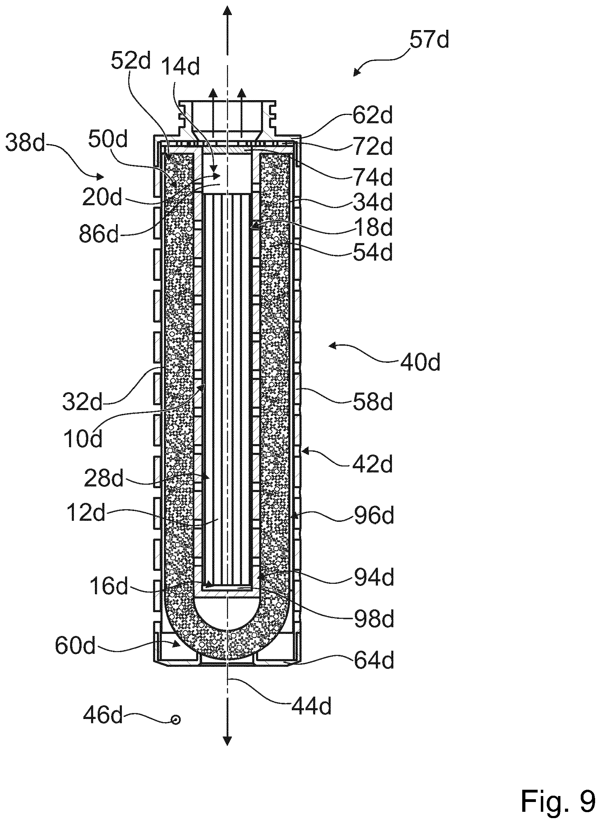

Die Fig. 9 zeigt eine weitere alternative Wasseraufbereitungsvorrichtung. Das Ausführungsbeispiel der Fig. 9 unterscheidet sich von den vorherigen Ausführungsbeispielen zumindest im Wesentlichen dadurch, dass eine Adsorptionseinheit 18d der Wasseraufbereitungsvorrichtung einer Filtereinheit 10d der Wasseraufbereitungsvorrichtung strömungstechnisch vorgeschaltet ist. Im vorliegenden Fall weist die Wasseraufbereitungsvorrichtung anstelle eines Adsorptionsgehäuses eine flexible Adsorptionsummantelung 96d auf. Die Adsorptionsummantelung 96d ist insbesondere als ein schlauchförmiger Sack ausgebildet. Die Adsorptionsummantelung 96d ist aus einem Stoff gebildet, wie beispielsweise einem Vlies. Die Adsorptionseinheit 18d der Wasseraufbereitungsvorrichtung ist innerhalb der Adsorptionsummantelung 96d angeordnet. Ferner umgreift im vorliegenden Fall die Adsorptionsummantelung 96d ein Filtergehäuse 32d der Wasseraufbereitungsvorrichtung. Das Filtergehäuse 32d ist im vorliegenden Fall senkrecht zu einer axialen Richtung 44d wasserdurchlässig. Das Filtergehäuse 32d dient als Abstandshalter zwischen der Filtereinheit 10d und der Adsorptionseinheit 18d. Die Filtereinheit 10d weist eine Gruppe 28d von Filterelementen 12d auf. Die Filterelemente 12d sind gerade. Im vorliegenden Fall weist die Wasseraufbereitungsvorrichtung zwei Halteelemente 20d, 98d für Endabschnitte 14d, 16d der Filterelemente 12d auf.

## Patentansprüche

1. Wasseraufbereitungsvorrichtung, welche zu einer Entfernung von Mikroschadstoffen, insbesondere Arzneimitteln, aus Wasser vorgesehen ist, mit einem Gehäuse (48a - 48d) und mit zumindest einer in dem Gehäuse (48a - 48d) angeordneten Adsorptionseinheit (18a - 18d), welche die Mikroschadstoffe in einem Betriebszustand zumindest teilweise adsorbiert und welche zumindest ein unspezifisches Adsorptionselement (50a - 50d) umfasst, wobei das unspezifische Adsorptionselement (50a - 50d) Aktivkohle und/oder ein mineralischen Adsorptionsmittel umfasst, wobei das mineralische Adsorptionsmittel ausgewählt ist aus Bentonit, Kieselgur, Kieselgel, Aluminiumoxid, Zinkoxid oder Mischungen daraus, **dadurch gekennzeichnet, dass** die Adsorptionseinheit (18a - 18d) zumindest ein spezifisches Adsorptionselement (52a - 52d) umfasst, wobei das spezifische Adsorptionselement zumindest ein Umkehrphasen-Adsorptionsmittel umfasst und wobei das spezifische Adsorptionselement zumindest ein Ionentauscher-Adsorptionsmittel und/oder zumindest ein Adsorptionsmittel, welches zu einer Adsorption über Wasserstoffbrücken vorgesehen ist, umfasst.

2. Wasseraufbereitungsvorrichtung nach Anspruch 1, **dadurch gekennzeichnet, dass** das unspezifische Adsorptionselement (50a - 50d) und das spezifische Adsorptionselement (52a - 52d) zumindest teilweise miteinander in Kontakt stehen.

3. Wasseraufbereitungsvorrichtung nach Anspruch 1 oder 2, **dadurch gekennzeichnet, dass** das unspezifische Adsorptionselement (50a - 50d) und das spezifische Adsorptionselement (52a - 52d) zumindest teilweise ineinander angeordnet sind.

4. Wasseraufbereitungsvorrichtung nach einem der vorhergehenden Ansprüche, **dadurch gekennzeichnet, dass** die Adsorptionseinheit (18a - 18d) zu mindestens 10 % und zu höchstens 98 % aus dem unspezifischen Adsorptionselement (50a - 50d) besteht.

5. Wasseraufbereitungsvorrichtung nach einem der vorhergehenden Ansprüche, **dadurch gekennzeichnet, dass** die Adsorptionseinheit (18a - 18d) zu mindestens 2 % und zu höchstens 90 % aus dem spezifischen Adsorptionselement (52a - 52d) besteht.

6. Wasseraufbereitungsvorrichtung nach einem der vorhergehenden Ansprüche, **dadurch gekennzeichnet, dass** die Adsorptionseinheit (18a - 18d) zumindest ein Adsorptionsmittel aufweist, welches einen Grundkörper (54a - 54d) der Adsorptionseinheit (18a - 18d) zumindest zu einem Großteil ausbildet.

7. Wasseraufbereitungsvorrichtung nach Anspruch 6, **dadurch gekennzeichnet, dass** das unspezifische Adsorptionselements (50a - 50d) den Grundkörper (54a - 54d) zumindest teilweise umfasst.

8. Wasseraufbereitungsvorrichtung nach einem der vorhergehenden Ansprüche, **dadurch gekennzeichnet, dass** das spezifische Adsorptionselement (52a - 52d) zumindest ein Komplexbildner-Adsorptionsmittel umfasst, wobei das Komplexbildner-Adsorptionsmittel einen oder mehrere geladene Liganden aufweist.

9. System mit einer Wasseraufbereitungsvorrichtung nach einem der vorhergehenden Ansprüche und mit zumindest einer der Wasseraufbereitungsvorrichtung strömungstechnisch vorgeschalteten Vorfiltrationseinheit (56a).

## Claims

1. A water processing device which is provided for removing micro-pollutants, in particular medicaments, from water, said device comprising a housing (48a - 48d) and at least one adsorption unit (18a - 18d) which is arranged in the housing (48a - 48d) and which at least partially adsorbs the micro-pollutants in an operating state and which comprises at least one non-specific adsorption element (50a - 50d), wherein the non-specific adsorption element (50a - 50d) comprises activated carbon and/or a mineral adsorbent, wherein the mineral adsorbent is selected from bentonite, diatomaceous earth, silica gel, alumina, zinc oxide or mixtures thereof, **characterised in that** the adsorption unit (18a - 18d) comprises at least one specific adsorption element (52a - 52d), wherein the specific adsorption element (52a - 52d) comprises at least one reversed-phase adsorbent and wherein the specific adsorption element (52a - 52d) comprises at least one ion exchanger adsorbent and/or at least one adsorbent which is provided for adsorption by means of hydrogen bridges.

2. A water processing device according to claim 1, **characterised in that** the non-specific adsorption element (50a - 50d) and the specific adsorption element (52a - 52d) are in contact with one another at least in part.

3. A water processing device according to claim 1 or 2, **characterised in that** the non-specific adsorption element (50a - 50d) and the specific adsorption element (52a - 52d) are arranged within one another at least in part.

4. A water processing device according to any one of the preceding claims, **characterised in that** the adsorption unit (18a - 18d) consists of the non-specific adsorption element (50a - 50d) to an extent of at least 10% and at most 98%.

5. A water processing device according to any one of the preceding claims, **characterised in that** the adsorption unit (18a - 18d) consists of the specific adsorption element (52a - 52d) to an extent of at least of 2% and at most 90%.

6. A water processing device according to any one of the preceding claims, **characterised in that** the adsorption unit (18a - 18d) comprises at least one adsorbent which forms a main body (54a - 54d) of the adsorption unit (18a - 18d) at least to a large extent.

7. A water processing device according to claim 6, **characterised in that** the non-specific adsorption element (50a - 50d) comprises the main body (54a - 54d) at least in part.

8. A water processing device according to any one of the preceding claims, **characterised in that** the specific adsorption element (52a - 52d) comprises at least one complexing agent adsorbent, wherein the complexing agent adsorbent comprises one or a plurality of charged ligands.

9. A system comprising a water processing device according to any one of the preceding claims and comprising at least one pre-filtration unit (56a) arranged upstream of the water processing device in respect of the direction of flow.

## Revendications

1. Dispositif de traitement de l'eau, lequel est prévu pour l'élimination hors de l'eau de micropolluants, en particulier de médicaments, avec un logement (48a - 48d) et avec au moins une unité d'adsorption (18a - 18d) agencée dans le logement (48a - 48d), laquelle dans un état de fonctionnement adsorbe au moins partiellement les micropolluants et laquelle comprend au moins un élément d'adsorption non spécifique (50a - 50d), dans lequel l'élément d'adsorption non spécifique (50a - 50d) comprend un charbon actif et/ou un adsorbant minéral, dans lequel l'adsorbant minéral est sélectionné parmi la bentonite, la diatomite, le gel de silice, un oxyde d'aluminium, l'oxyde de zinc ou des mélanges de ceux-ci, **caractérisé en ce que** l'unité d'adsorption (18a - 18d) comprend au moins un élément d'adsorption spécifique (52a - 52d), dans lequel l'élément d'adsorption spécifique comprend au moins un adsorbant à phases inversées et dans lequel l'élément d'adsorption spécifique comprend au moins un adsorbant à échangeur d'ions et/ou au moins un élément d'adsorption qui est prévu pour une adsorption par liaison hydrogène.

2. Dispositif de traitement de l'eau selon la revendication 1, **caractérisé en ce que** l'élément d'adsorption non spécifique (50a - 50d) et l'élément d'adsorption spécifique (52a - 52d) sont au moins partiellement en contact l'un avec l'autre.

3. Dispositif de traitement de l'eau selon la revendication 1 ou 2, **caractérisé en ce que** l'élément d'adsorption non spécifique (50a - 50d) et l'élément d'adsorption spécifique (52a - 52d) sont au moins partiellement agencés l'un dans l'autre.

4. Dispositif de traitement de l'eau selon l'une des revendications précédentes, **caractérisé en ce que** l'unité d'adsorption (18a - 18d) est constituée à au moins 10 % et au plus 98 % de l'élément d'adsorption non spécifique (50a - 50d).

5. Dispositif de traitement de l'eau selon l'une des revendications précédentes, **caractérisé en ce que** l'unité d'adsorption (18a - 18d) est constitué à au moins 2 % et au plus 90 % de l'élément d'adsorption spécifique (52a - 52d).

6. Dispositif de traitement de l'eau selon l'une des revendications précédentes, **caractérisé en ce que** l'unité d'adsorption (18a - 18d) présente au moins un adsorbant, lequel forme au moins en grande partie un corps de base (54a - 54d) de l'unité d'adsorption (18a - 18d).

7. Dispositif de traitement de l'eau selon la revendication 6, **caractérisé en ce que** l'élément d'adsorption non spécifique (50a - 50d) comprend au moins partiellement le corps de base (54a - 54d).

8. Dispositif de traitement de l'eau selon l'une des revendications précédentes, **caractérisé en ce que** l'élément d'adsorption spécifique (52a - 52d) comprend au moins un adsorbant complexant, dans lequel l'adsorbant complexant présente un ou plusieurs ligands chargés.

9. Système avec un dispositif de traitement de l'eau selon l'une des revendications précédentes et avec au moins une unité de pré-filtration (56a) montée fluidiquement en amont du dispositif de traitement de l'eau.
